# EUROPÄISCHE PATENTSCHRIFT

(11) **EP 2 041 443 B1**
(45) Veröffentlichungstag und Bekanntmachung des Hinweises auf die Patenterteilung: **05.01.2011**
(21) Anmeldenummer: 07786982.4
(22) Anmeldetag: 02.07.2007
(51) Int. Cl.: F16C 29/04, F16C 33/66

(54) **LAUFROLLENFÜHRUNG**
CASTOR GUIDE
GUIDE À GALETS DE ROULEMENT

(30) Priorität: 08.07.2006 DE 102006031704
(43) Veröffentlichungstag der Anmeldung: 01.04.2009
(73) Patentinhaber: Schaeffler Technologies GmbH & Co. KG, 91074 Herzogenaurach (DE)
(72) Erfinder: SCHINDLER, Reiner, 66894 Krähenberg (DE)
(74) Vertreter: Heinzelmann, Ingo
(86) Internationale Anmeldenummer: PCT/EP2007/056631
(87) Internationale Veröffentlichungsnummer: WO 2008/006726

(56) Entgegenhaltungen:
- EP-A- 1 010 907
- DE-U1- 9 319 226
- DE-U1- 9 407 424
- JP-A- 2003 161 358
- US-A- 5 547 285
- US-A1- 2006 140 519

## Beschreibung

Die vorliegende Erfindung betrifft eine Laufrollenführung, bei der Laufrollen an einer Führungsschiene abwälzen.

Aus DE 93 19 226 U1 beispielsweise ist eine Laufrollenführung nach den Merkmalen des Oberbegriffs des Anspruchs 1 bekannt geworden. Eine Nachschmiereinheit umfasst einen Schmierstift, der mittels einer Feder entweder gegen eine Laufbahn der Führungsschiene oder gegen eine der Laufrollen angefedert ist. An einem Rollenträger sind vier Laufrollen befestigt, von denen jeweils zwei an einer Laufbahn der Führungsschiene abwälzen. Zwischen beiden Laufrollenpaaren ist jeweils eine Nachschmiereinheit angeordnet. Nachteilig bei dieser bekannten Laufrollenführung ist, dass im Fall der Rollenschmierung lediglich eine Rolle eines Laufrollenpaares geschmiert wird. Die zweite Laufrolle des Laufrollenpaares kann dadurch geschmiert werden, dass Schmierstoff zunächst von der geschmierten Laufrolle an die Laufbahn der Führungsschiene und von dort an die zweite Laufrolle dieses Laufrollenpaares gelangt.

Aufgabe der vorliegenden Erfindung ist es, eine Laufrollenführung nach den Merkmalen des Oberbegriffs des Anspruchs 1 anzugeben, bei der die Schmierung verbessert ist. Erfindungsgemäß wird diese Aufgabe dadurch gelöst, dass die zwischen zwei einander benachbarten Rollen angeordnete Nachschmiereinheit ein Schmierstoff abgebendes Schmierelement mit zwei Schmierstellen aufweist, die in Schmierkontakt mit den beiden Laufbahnen oder mit zwei entlang der Führungsschiene hintereinander angeordneten Laufrollen stehen. Anders als bei der bekannten Laufrollenführung können zugleich beide Laufrollen eines Laufrollenpaares geschmiert werden, ohne dass es einer zusätzlichen Nachschmiereinheit bedarf.

Bei einer vorteilhaften Variante ist eine u-förmige Führungsschiene vorgesehen, an deren beiden Schenkeln an einander zugewandten Seiten die Laufbahnen für mindestens drei hintereinander angeordnete Rollen ausgebildet sind, von denen mindestens eine an der Laufbahn des einen Schenkels und von denen mindestens eine Laufrolle an der Laufbahn des anderen Schenkels abwälzt, wobei eine Nachschmiereinheit zwischen zwei einander benachbarten Rollen angeordnet ist. Diese Nachschmiereinheit kann dann so angeordnet sein, dass ihre beiden Schmierstellen entweder in Schmierkontakt mit zwei einander benachbarten Laufrollen stehen oder aber in Schmierkontakt mit den beiden gegenüberliegend angeordneten Laufbahnen der Führungsschiene stehen. In beiden Fällen kann in zweckmäßiger Weise eine gemeinsame Nachschmiereinheit zur Schmierung entweder der beiden Laufbahnen oder von zumindest zwei Laufrollen eingesetzt werden.

Die Nachschmiereinheit kann zwei Schmierkissen mit je einer dieser Schmierstellen aufweisen, wobei eine zwischen den beiden Schmierkissen angeordnete Feder die Schmierkissen mit ihren Schmierstellen gegen die Laufrollen oder gegen die Laufbahnen anfedert. Sofern die Schmierkissen abrasivem Verschleiß unterliegen, kann die Feder ein Nachstellen dieser Schmierkissen problemlos ermöglichen. Diese Schmierkissen können aus porösem saugfähigem Material oder aus einem Festkörper gebildet sein. Alternativ zu der Feder kann auch ein einziges Schmierkissen mit federelastischen Eigenschaften vorgesehen werden, das dann federnd gegen die Laufrollen oder die Laufbahnen vorgespannt ist.

Vorzugsweise weist ein Gehäuse der Nachschmiereinheit einander gegenüberliegend angeordnete konkave Gehäuseabschnitte auf, die an die Außenkontur der Laufrollen angepasst sind. Auf diese Weise kann der zwischen zwei hintereinander angeordneten Laufrollen zur Verfügung stehende Bauraum weitestgehend von diesem Gehäuse beansprucht werden. Dies ist insbesondere dann zweckmäßig, wenn das Gehäuse als Schmierstoffreservoir ausgebildet ist, und eine möglichst große Menge an Schmierstoff aufnehmen soll.

Nachstehend wird die Erfindung anhand von drei in insgesamt drei Figuren abgebildeten Ausführungsbeispielen näher erläutert. Es zeigen:
- Figur 1: eine Ansicht einer erfindungsgemäßen Laufrollenführung,
- Figur 2: eine Ansicht einer weiteren erfindungsgemäßen Laufrollen- führung mit zwei alternativen Ausgestaltungen der Nach- schmiereinheit und
- Figur 3: einen Querschnitt durch die Laufrollenführung aus Figur 2.

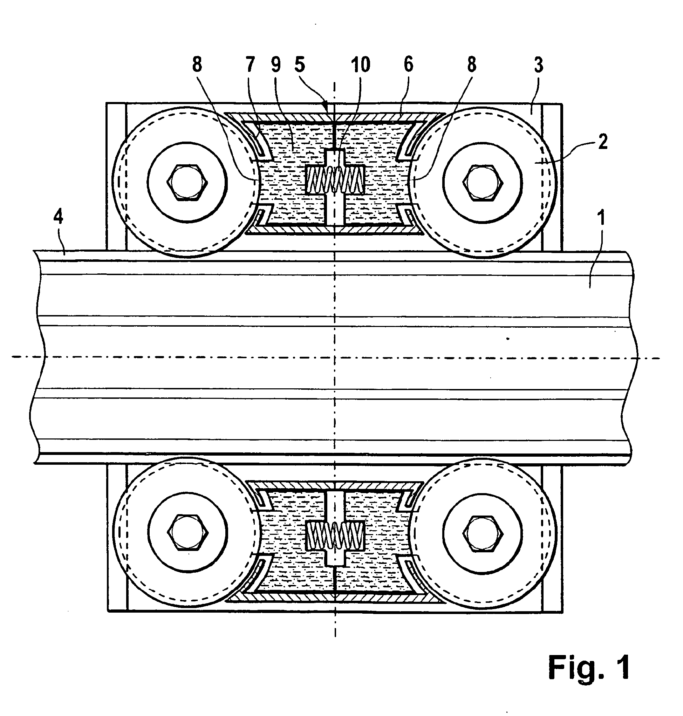

Die erfindungsgemäße Laufrollenführung aus Figur 1 weist eine Führungsschiene 1 auf, auf der ein mit Laufrollen 2 bestückter Laufrollenträger 3 gelagert ist. Der Laufrollenträger 3 ist vorliegend durch eine Platte gebildet, an der die vier Laufrollen 2 gehaltert sind, wobei in Längsrichtung der Führungsschiene 1 gesehen zwei hintereinander angeordnete Laufrollen 2 ein Laufrollenpaar bilden. Zwischen den beiden Laufrollenpaaren ist die Führungsschiene 1 angeordnet.

Die Führungsschiene 1 ist an einander gegenüberliegenden Seiten jeweils mit einer Laufbahn 4 für die Laufrollen 2 versehen, wobei die Laufrollen 2 an diesen Laufbahnen 4 abwälzen.

Die beiden Laufrollen 2 eines Laufrollenpaares sind mit Abstand zueinander angeordnet, wobei zwischen den beiden Laufrollen 2 eines Laufrollenpaares jeweils eine Nachschmiereinheit 5 angeordnet ist. Diese Nachschmiereinheit 5 weist ein Gehäuse 6 mit in Längsrichtung der Führungsschiene 1 gesehen einander gegenüberliegenden konkaven Gehäuseabschnitten 7 auf, wobei diese konkaven Gehäuseabschnitte 7 an die Außenkontur der Laufrollen 2 m angepasst sind. Die Nachschmiereinheit 5 weist zwei Schmierstellen 8 auf, die jeweils mit einer der beiden Laufrollen 2 des Laufrollenpaares in Schmierkontakt stehen. Diese Nachschmiereinheit weist ferner zwei in dem Gehäuse 6 angeordnete Schmierkissen 9 auf, wobei jedes Schmierkissen mit einer der Schmierstellen 8 versehen ist. Zwischen den beiden Schmierkissen 9 ist eine Feder 10 angeordnet, die die beiden Schmierkissen 9 gegen die beiden Laufrollen 2 anfedert. Die Schmierkissen 9 sind aus saugfähigem, mit Schmierstoff getränktem Material gebildet, wobei der Schmierstoff im Schmierkontakt an der Schmierstelle 8 an die Laufrollen 2 abgegeben wird.

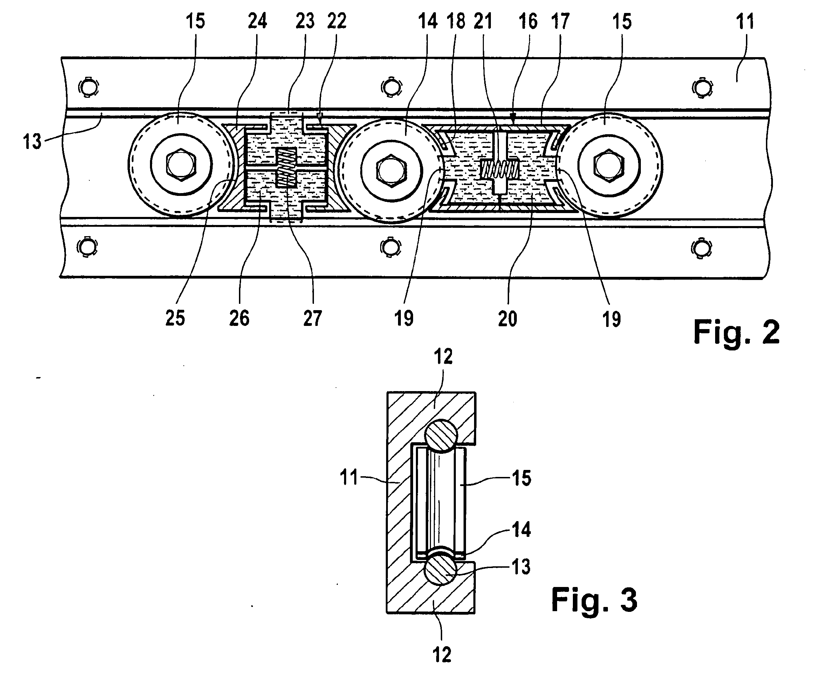

Bei den weiteren, in den Figuren 2 und 3 abgebildeten erfindungsgemäßen Laufrollenführungen ist eine u-förmige Führungsschiene 11 vorgesehen, an deren beiden Schenkeln 12 an einander zugewandten Seiten Laufbahnen 13 für Laufrollen 14, 15 ausgebildet sind. An einem hier nicht weiter abgebildeten Laufrollenträger sind insgesamt drei Laufrollen 14, 15 gehaltert. Die mittlere Laufrolle 14 wälzt an der einen Laufbähn 13 ab, die beiden äußeren Laufrollen 15 wälzen an der gegenüberliegenden Laufbahn 13 ab.

Figur 2 zeigt nun zwei alternative Anordnungen für eine Nachschmiereinheit, wobei die beiden Alternativen nachstehend ausführlich beschrieben werden:

Gemäß der ersten Alternative ist eine Nachschmiereinheit 16 vorgesehen, die in ihrer Ausbildung und in ihrer Anordnung der oben zu der Figur 1 beschriebenen Nachschmiereinheit entspricht. Demzufolge weist auch diese Nachschmiereinheit 16 ein Gehäuse 17 mit konkaven Gehäuseabschnitten 18 auf, wobei die eine Schmierstelle 19 mit der Laufrolle 14 und die andere Schmierstelle 19 mit der Laufrolle 15 in Schmierkontakt steht. In dem Gehäuse 17 sind zwei Schmierkissen 20 angeordnet, wobei zwischen den beiden Schmierkissen 20 eine Feder 21 angeordnet ist, die die beiden Schmierkissen 20 mit ihren Schmierstellen 19 gegen die beiden Laufrollen 14, 15 anfedert.

Bei der zweiten erfindungsgemäßen Alternative in der Figur 2 ist eine Nachschmiereinheit 22 vorgesehen, deren beide Schmierstellen 23 mit den beiden gegenüberliegenden Laufbahnen 13 der Führungsschiene 11 in Schmierkotakt stehen. Diese Nachschmiereinheit 22 weist ein Gehäuse 24 auf, dessen in Längsrichtung der Führungsschiene 11 gesehen gegenüberliegend angeordnete Gehäuseabschnitte 25 konkav gewölbt und an die Außenkontur der Laufrollen 14, 15 angepasst sind. In dem Gehäuse 24 sind zwei Schmierkissen 26 angeordnet, wobei zwischen den beiden Schmierkissen 26 eine Feder 27 vorgesehen ist. Die Feder 27 drückt die beiden Schmierkissen 26 an ihren Schmierstellen 23 gegen die Laufbahnen 13 der Führungsschiene 11.

Bei allen beschriebenen Ausführungsbeispielen dient das Gehäuse auch als Schmierstoffreservoir, in dem Schmierstoff gespeichert werden kann. Bei allen Ausführungsbeispielen ist sichergestellt, dass mit einer gemeinsamen Nachschmiereinheit jedenfalls alternativ die beiden Laufbahnen der Führungsschiene oder zwei benachbart angeordnete Laufrollen geschmiert werden.

### Bezugszahlenliste

- 1: Führungsschiene
- 2: Laufrolle
- 3: Laufrollenträger
- 4: Laufbahn
- 5: Nachschmiereinheit
- 6: Gehäuse
- 7: Gehäuseabschnitt
- 8: Schmierstelle
- 9: Schmierkissen
- 10: Feder
- 11: u-förmige Führungsschiene
- 12: Schenkel
- 13: Laufbahn
- 14: Laufrolle
- 15: Laufrolle
- 16: Nachschmiereinheit
- 17: Gehäuse
- 18: Gehäuseabschnitt
- 19: Schmierstelle
- 20: Schmierkissen
- 21: Feder
- 22: Nachschmiereinheit
- 23: Schmierstelle
- 24: Gehäuse
- 25: Gehäuseabschnitt
- 26: Schmierkissen
- 27: Feder

## Patentansprüche

1. Laufrollenführung, mit einer Führungsschiene (1, 11), an deren mit parallelem Abstand zueinander angeordneten Laufbahnen (4, 13) Laufrollen (4, 14, 15) abwälzen, wobei eine Nachschmiereinheit (5, 16, 22) vorgesehen ist, die Schmierstoff an die Laufbahnen (4, 13) oder die Laufrollen (2, 14, 15) abgibt, **dadurch gekennzeichnet, dass** die zwischen zwei einander benachbarten Laufrollen angeordnete Nachschmiereinheit (5, 16, 22) ein Schmierstoff abgebendes Schmierelement mit zwei Schmierstellen (8, 19, 23) aufweist, die in Schmierkontakt mit den beiden Laufbahnen (4, 13) oder mit zwei entlang der Führungsschiene (1, 11) hintereinander angeordneten Laufrollen (2, 14, 15) stehen.

2. Laufrollenführung nach Anspruch 1, bei der eine u-förmige Führungsschiene (11) vorgesehen ist, an deren beiden Schenkeln (12) an einander zugewandten Seiten die Laufbahnen (13) für mindestens drei hintereinander angeordnete Laufrollen (14, 15) ausgebildet sind, von denen mindestens eine an der Laufbahn (13) des einen Schenkels (12) und von denen mindestens eine Laufrolle (15) an der Laufbahn (13) des anderen Schenkels (12) abwälzt, wobei eine Nachschmiereinheit (16, 22) zwischen zwei einander benachbarten Laufrollen (14, 15) angeordnet ist.

3. Laufrollenführung nach Anspruch 1, bei der die Nachschmiereinheit (5, 16, 22) zwei Schmierkissen (9,20, 26) mit je einer der Schmierstellen (8, 19, 23) aufweist, wobei eine zwischen den beiden Schmierkissen (9, 20, 26) angeordnete Feder (10, 21, 27) die Schmierkissen (9, 20, 26) mit ihren Schmierstellen (8, 19, 23) gegen die Laufrollen (2, 14, 15) oder die Laufbahnen (13) anfedert.

4. Laufrollenführung nach Anspruch 1, bei der die Nachschmiereinheit (5, 16, 22) ein Gehäuse (6, 17, 24) mit einander gegenüberliegenden konkaven Gehäuseabschnitten (7, 18, 25) aufweist, die an die Außenkontur der Laufrollen (4, 14, 15) angepasst sind.

5. Laufrollenführung nach Anspruch 4, bei der das Gehäuse (6, 17, 24) als Schmierstoffreservoir ausgebildet ist.

## Claims

1. Track roller guide, with a guide rail (1, 11), on whose running tracks (4, 13) arranged in parallel at a distance from one another track rollers (4, 14, 15) roll, a relubricating unit (5, 16, 22) being provided, which dispenses lubricant onto the running tracks (4, 13) or track rollers (2, 14, 15), **characterized in that** the relubricating unit (5, 16, 22) arranged between two track rolls adjacent to one another has a lubricant-dispensing lubricating element with two lubricating points (8, 19, 23) which are in lubricating contact with the two running tracks (4, 13) or with two track rollers (2, 14, 15) arranged one behind the other along the guide rail (1, 11).

2. Track roller guide according to Claim 1, in which a U-shaped guide rail (11) is provided, on the two legs (12) of which are formed, on sides facing one another, the running tracks (13) for at least three track rollers (14, 15) which are arranged one behind the other and at least one of which rolls on the running track (13) of one leg (12) and at least one track roller (15) of which rolls on the running track (13) of the other leg (12), a relubricating unit (16, 22) being arranged between two track rollers (14, 15) adjacent to one another.

3. Track roller guide according to Claim 1, in which the relubricating unit (5, 16, 22) has two lubricating pads (9, 20, 26), each with one of the lubricating points (8, 19, 23), a spring (10, 21, 27) arranged between the two lubricating pads (9, 20, 26) springing the lubricating pads (9, 20, 26) with their lubricating points (8, 19, 23) against the track rollers (2, 14, 15) or the running tracks (13).

4. Track roller guide according to Claim 1, in which the relubricating unit (5, 16, 22) has a housing (6, 17, 24) with concave housing portions (7, 18, 25) which lie opposite one another and which have adapted to the outer contour of the track rollers (2, 14, 15).

5. Track roller guide according to Claim 4, in which the housing (6, 17, 24) is designed as a lubricant reservoir.

## Revendications

1. Guide à galets de roulement, comprenant un rail de guidage (1, 11) sur les pistes de roulement (4, 13), disposées à distance parallèle l'une de l'autre, duquel roulent des galets de roulement (4, 14, 15), une unité de lubrification (5, 16, 22) étant prévue pour fournir du lubrifiant aux pistes de roulement (4, 13) ou aux galets de roulement (2, 14, 15), **caractérisé en ce que** l'unité de lubrification (5, 16, 22) disposée entre deux galets de roulement adjacents présente un élément de lubrification fournissant du lubrifiant avec deux points de lubrification (8, 19, 23) qui sont en contact de lubrification avec les deux pistes de roulement (4, 13) ou avec deux galets de roulement (2, 14, 15) disposés l'un derrière l'autre le long du rail de guidage (1, 11).

2. Guide à galets de roulement selon la revendication 1, dans lequel il est prévu un rail de guidage (11) en forme de u, sur les deux branches (12) duquel, sur des côtés tournés l'un vers l'autre, sont réalisées les pistes de roulement (13) pour au moins trois galets de roulement (14, 15) disposés les uns derrière les autres, dont au moins un roule sur la piste de roulement (13) d'une branche (12) et dont au moins un galet de roulement (15) roule sur la piste de roulement (13) de l'autre branche (12), une unité de lubrification (16, 22) étant disposée entre deux galets de roulement adjacents (14, 15).

3. Guide à galets de roulement selon la revendication 1, dans lequel l'unité de lubrification (5, 16, 22) présente deux coussins de lubrification (9, 20, 26) ayant chacun l'un des points de lubrification (8, 19, 23), un ressort (10, 21, 27) disposé entre les deux coussins de lubrification (9, 20, 26) supportant à ressort les coussins de lubrification (9, 20, 26) avec leurs points de lubrification (8, 19, 23) contre les galets de roulement (2, 14, 15) ou les pistes de roulement (13).

4. Guide à galets de roulement selon la revendication 1, dans lequel l' unité de lubrification (5, 16, 22) présente un boîtier (6, 17, 24) avec des portions de boîtier concaves, mutuellement opposées (7, 18, 25) qui sont adaptées au contour extérieur des galets de roulement (4, 14, 15).

5. Guide à galets de roulement selon la revendication 4, dans lequel le boîtier (6, 17, 24) est réalisé sous forme de réservoir de lubrifiant.
